# EUROPEAN PATENT APPLICATION

(11) **EP 1 976 096 A2**
(43) Date of publication of application: **01.10.2008**
(21) Application number: 08251134.6
(22) Date of filing: 27.03.2008
(51) Int. Cl.: H02K 1/27

(54) **Segmented permanent magnet rotor for high speed synchronous machines**

(30) Priority: 27.03.2007 US 728840
(71) Applicant: Hamilton Sundstrand Corporation, Windsor Locks, CT 06096-1010 (US)
(72) Inventor: Saban, Daniel M., Corona, CA 92822 (US); Vanek, Laurence D., Janesville, WI 53545 (US)
(74) Representative: Tomlinson, Kerry John

(57) **Abstract**

A segmented permanent-magnet rotor for high-speed synchronous machines reduces eddy-current losses by axially segmenting the containment sleeve (21) and the permanent magnets (28a-h). The axial segmentation of the containment sleeve includes forming grooves (24a-c) circumferentially around the outer surface of the containment sleeve (21). The circumferential grooves (24a-c) disrupt the generation of eddy currents on the outer surface of the containment sleeve and therefore reduce eddy-current losses in the containment sleeve (21). Axial segmentation of the permanent magnets (28a-h) also disrupts eddy current formation, thereby reducing eddy current losses in the permanent magnets. In addition, the presence of an electrically insulating layer (26) between the containment sleeve (21) and the permanent magnets (28a-h) reduces eddy current migration from the containment sleeve (21) to the permanent magnets (28a-h), and therefore provides additional reduction of eddy-current losses.

## Description

### BACKGROUND OF THE INVENTION

The present invention relates to high-speed synchronous machines, and more specifically to high-speed synchronous machines having rotor sleeves and permanent magnets (PMs).

Synchronous machines, a variety of which is the surface mount permanent magnet (SMPM) machine, have become increasingly popular in a variety of applications. For instance, SMPM machines may be used in conjunction with high-speed turbo machines commonly found in both aerospace and ground applications.

The permanent magnets employed in the rotor portion of a synchronous machine may be constrained in the radial direction by a containment band, or sleeve. Containment sleeves are typically used in high-speed applications to prevent centripetal forces from separating the permanent magnets from a magnetic rotor hub. Although in some embodiments, the containment sleeve may be formed using a non-conductive composite material, a number of applications require an interference fit between the containment sleeve and the permanent magnets. In this type of application, the containment sleeve is typically formed of a conducting material such as steel.

During operation of the synchronous machine, the containment sleeve is exposed to a variety of magnetic fields differing in spatial and temporal disposition. In particular, asynchronous magnetic fields experienced by a conducting containment sleeve result in induced currents being produced (primarily) axially along the length of the containment sleeve. If not managed properly, high eddy-current losses may result in failure of the synchronous machine. In particular, high eddy-current losses generate heat within the components of the synchronous machine that may result in thermal overloading.

### BRIEF SUMMARY OF THE INVENTION

A permanent-magnet rotor has an axially segmented containment sleeve and axially segmented permanent magnets that reduce eddy-current losses in the permanent-magnet rotor. The containment sleeve is axially segmented by one or more circumferential grooves located on the outer periphery of the containment sleeve that disrupt an axial current path around the outer periphery of the containment sleeve, thereby reducing eddy current losses (less effective would be grooves on the inner periphery). The permanent magnets contained by the containment sleeve are also axially segmented by circumferential gaps that reduce eddy current losses in the permanent magnets. In addition, an insulating layer is located between the containment sleeve and the permanent magnets to reduce eddy-current migration between the containment sleeve and the permanent magnets, thereby reducing overall eddy-current losses in the containment sleeve and the permanent magnets.

Certain embodiments of the invention will now be described by way of example and not limitation.

### BRIEF DESCRIPTION OF THE DRAWINGS

FIG. 1 is a perspective view of a permanent-magnet rotor as known in the prior art.
FIG. 2 is an end view of the permanent-magnet rotor shown in FIG. 1.
FIG. 3 is a perspective view of one embodiment of a segmented permanent-magnet rotor.
FIG. 4 is a cross-sectional view of an embodiment of the segmented permanent-magnet rotor shown in FIG. 3.
FIG. 5 is a cross-sectional view of another embodiment of the segmented permanent-magnet rotor shown in FIG. 3.
FIG. 6 is a broken view of the segmented permanent-magnet rotor shown in FIG. 4.

### DETAILED DESCRIPTION

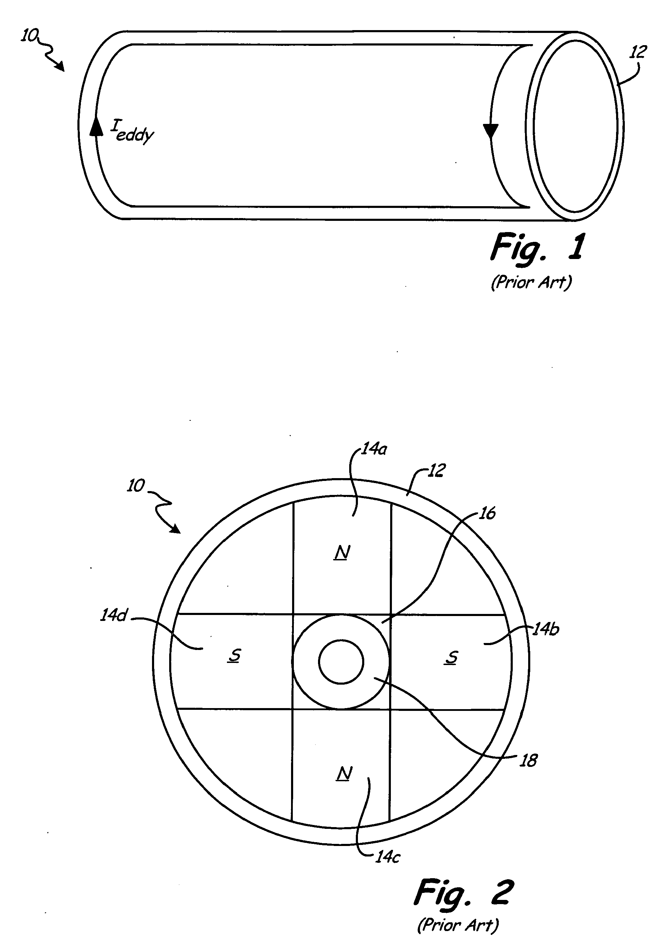

FIGS. 1 and 2 illustrate a prior art embodiment of a permanent-magnet rotor. FIG. 1 is a perspective view of the permanent-magnet rotor, and FIG. 2 is an end view of the same permanent-magnet rotor.

As shown in FIG. 2, permanent-magnet rotor 10 includes containment sleeve 12, permanent magnets 14a, 14b, 14c, and 14d (collectively, permanent magnets 14), magnetic steel hub 16, and rotor core 18.

Permanent-magnet rotor 10 may be used in high-speed permanent-magnet machines, such as permanent-magnet generators and permanent-magnet motors. Containment sleeve 12 is located on the outer periphery of permanent magnets 14, and is used to contain permanent magnets 14 in the radial direction. In particular, containment sleeves are used in high-speed applications, in which centripetal force generated by the rotation of permanent-magnet rotor 10 causes permanent magnets 14 to pull away from magnetic steel hub 16. Therefore, in high-speed applications, containment sleeve 12 serves to maintain the position of permanent magnets 14.

Depending on the application, containment sleeve 12 is subjected to various magnetic fields, of differing spatial and temporal disposition. For power conversion (either in motor or generator applications), only the magnetic fields rotating synchronously with permanent-magnet rotor 10 are desirable. Any fields rotating asynchronously with respect to permanent-magnet rotor 10 will induce unwanted eddy currents. In particular, because containment sleeve 12 is located in close proximity to stator field windings (not shown), the eddy-current losses are typically greater in containment sleeve 12. As shown in FIG. 1, a current path for unwanted eddy currents exist along the axial length of permanent-magnet rotor 10.

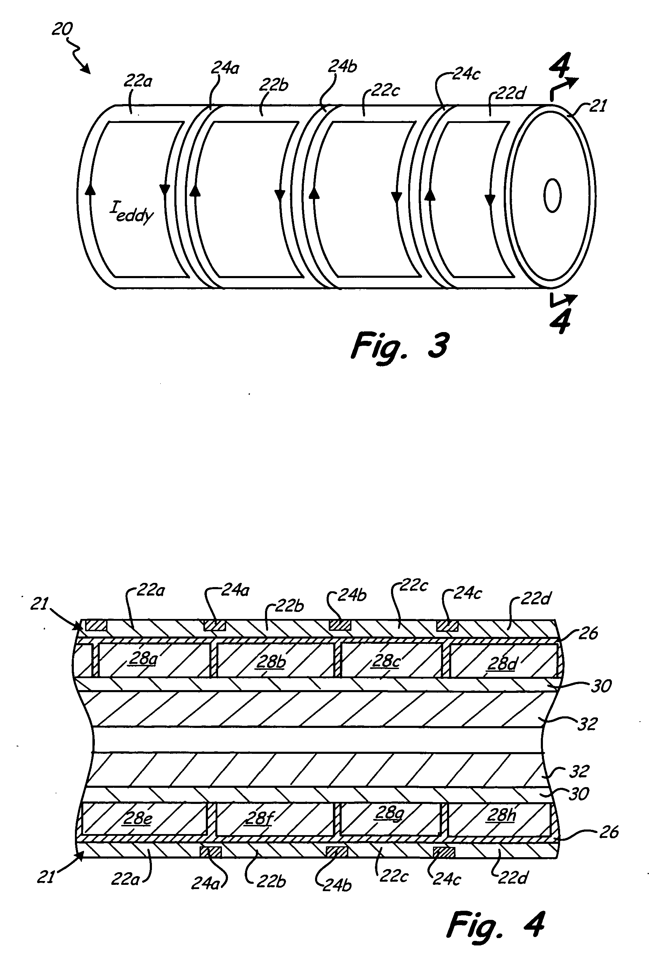

FIGS. 3-6 illustrate permanent-magnet rotor configurations that seek to reduce the impact of eddy-current losses. In general, eddy-current losses are reduced by axially segmenting the containment sleeve and the permanent magnets to disrupt the axial current path. In effect, the axial segmentation divides the axial current path into a number of individual current paths, each localized to an axial segmentation. This has the effect of lengthening the overall current path for eddy currents since each eddy-current path must be closed within the conductors, thereby reducing the magnitude of eddy currents generated in both the containment sleeve and the permanent magnets.

FIG. 3 shows an axially segmented permanent-magnet rotor 20 in which containment sleeve 21 is divided into a number of containment-sleeve segments 22a, 22b, 22c, and 22d (collectively, containment-sleeve segments 22). The axial segmentation of containment sleeve 21 prevents the formation of an axial current path that extends along the entire length of permanent-magnet rotor 20. Instead, localized eddy currents are contained within each containment-sleeve segment 22.

Each containment-sleeve segment 22 is electrically isolated (at least at the outer surface of containment-sleeve segments 22) from adjacent containment-sleeve segments 22 by grooves 24a, 24b, and 24c (collectively, grooves 24) extending circumferentially around the outer periphery of containment sleeve 22. For instance, containment-sleeve segment 22a is separated from containment-sleeve segment 22b by circumferential groove 24a.

As discussed above, the effect of dividing containment sleeve 21 into two or more containment-sleeve segments 22 is to increase the collective length of current paths associated with the eddy current losses. The increased current-path length reduces the magnitude of eddy currents generated on the outer surface of containment sleeve 21, and therefore decreases the eddy-current losses and the potential for thermal overloading of permanent-magnet rotor 20.

As discussed with respect to FIGS. 4-6 below, eddy current generation in both the containment sleeve and permanent magnets contained beneath the containment sleeve can be reduced by axially separating both the sleeve and the permanent magnets.

FIG. 4 is a cross-section taken along line 4-4 of permanent-magnet rotor 20 shown in FIG. 3. The cross-sectional view illustrates each of the components located within permanent-magnet rotor 20. These components include: containment sleeve 21 (which includes containment-sleeve segments 22a, 22b, 22c, and 22d), circumferential grooves 24a, 24b and 24c, insulating layer 26, permanent magnets 28a, 28b, 28c, 28d, 28e, 28f, 28g, and 28h (collectively, permanent magnets 28), steel rotor hub 30, and rotor core 32.

In this embodiment, containment sleeve 21 is an integral component that includes containment-sleeve segments 22 defined by the location of circumferential grooves 24 formed around an outer periphery of containment sleeve 21. Circumferential grooves 24a, 24b, and 24c divide containment sleeve 21 into containment-sleeve segments 22a, 22b, 22c, and 22d. In the embodiment shown in FIG. 4, circumferential grooves 24a, 24b, and 24c are filled with a layer of insulating material that provides electrical isolation between the outer surface of adjacent containment-sleeve segments 22. In other embodiments, circumferentially grooves 24 are left unfilled, with the air gap between adjacent containment-sleeve segments 22 providing the electrical isolation between the outer surfaces of adjacent containment-sleeve segments 22. In both embodiments, the electrical isolation between the outer surfaces of adjacent containment-sleeve segments 22 reduces the flow of eddy currents. Because eddy currents typically form on the outer surface of containment sleeve 21, circumferential grooves 24 (and associated insulating material) do not have to extend through the entire depth of containment sleeve 21, as shown in FIG. 4.

In addition to axial segmentation of containment sleeve 21, permanent magnets (including permanent magnets 28a-28h shown in this view) within permanent-magnet rotor 20 are also segmented axially to disrupt and reduce eddy currents generated between adjacent permanent magnets 28. The principle of axial segmentation discussed with respect to containment sleeve 21 applies as well to permanent magnets 28. The principal idea is to lengthen the axial current path, thereby decreasing eddy-current magnitudes in permanent magnets 28. In the embodiment shown in FIG. 4, adjacent permanent magnets 28 are axially separated by gaps that include insulation that may be continuous with first insulating layer 26, which electrically isolates adjacent permanent magnets 28 to disrupt an axial current path formed along the length of permanent magnets 28. The net result of the axial segmentation of permanent magnets 28 is the reduction in eddy-current losses within permanent magnets 28.

In addition, first insulating layer 26 is formed between containment sleeve 21 and permanent magnets 28, as well as in the gaps separating adjacent permanent magnets 28 (as discussed above). In other embodiments, the insulating layer located between adjacent permanent magnets may be of a different insulating material than the insulating layer located between containment sleeve 21 and permanent magnets 28.

The presence of first insulating layer 26 between containment sleeve 21 and permanent magnets 28 provides electrical isolation between containment sleeve 21 and permanent magnets 28, and reduces eddy current migration from containment sleeve 21 to permanent magnets 28. That is, axial segmentation of containment sleeve 21, while reducing eddy current formation in general within containment sleeve 21, may result in localized hotspots in which eddy currents migrate from containment sleeve 21 to permanent magnets 28. In particular, the localized hotspots are formed at the discontinuities in the current path caused by the axial segmentation of containment sleeve 21. The presence of insulating layer 26 therefore reduces or minimizes the formation of thermal hotspots in permanent magnets 28 due to the migration of eddy currents from containment sleeve 21 to permanent magnets 28.

In addition, each permanent magnet 28 is bonded or otherwise secured to rotor hub 30. In one embodiment, a further insulating layer (not shown) is located between permanent magnets 28 and rotor hub 30. Asynchronous magnetic fields generated by a stator (not shown) and corresponding stator windings are most significant near the outer periphery of permanent-magnet rotor 20. Therefore, eddy-current losses are typically more significant within containment sleeve 21 and permanent magnets 28 than within rotor hub 30. However, depending on the application, thermal losses generated at rotor hub 30 may be reduced by adding an additional insulating layer between permanent magnets 28 and rotor hub 30.

As shown in FIG. 4, gaps between adjacent permanent magnets 28 are aligned with circumferential grooves 24 axially segmenting containment-sleeve segments 28. The formation of grooves 24 on the outer periphery of containment sleeve 21, while providing a reduction in eddy-current losses, may reduce the mechanical strength of containment sleeve 21. To offset or reduce the mechanical strain placed upon containment sleeve 21, and in particular the areas in which grooves 24a, 24b, and 24c have been formed, the gaps separating permanent magnets 28 may be aligned with circumferential grooves 24 separating containment-sleeve segments 22, as shown.

Although in the embodiment shown in FIG. 4, containment sleeve 21 is divided into the same number of axially segmented containment-sleeve segments 22 (four) as axially segmented permanent magnets 28 (four), in other embodiments the number of containment-sleeve segments 22 may differ from the number of axially segmented permanent magnets 28. For instance, in one embodiment a containment sleeve may be axially segmented into eight containment-sleeve segments by seven circumferential grooves, and a set of permanent magnets may be axially segmented into four permanent magnets. In this embodiment, the gaps between the four axially segmented permanent magnets may be aligned with every other circumferential groove to reduce mechanical strain on the containment sleeve.

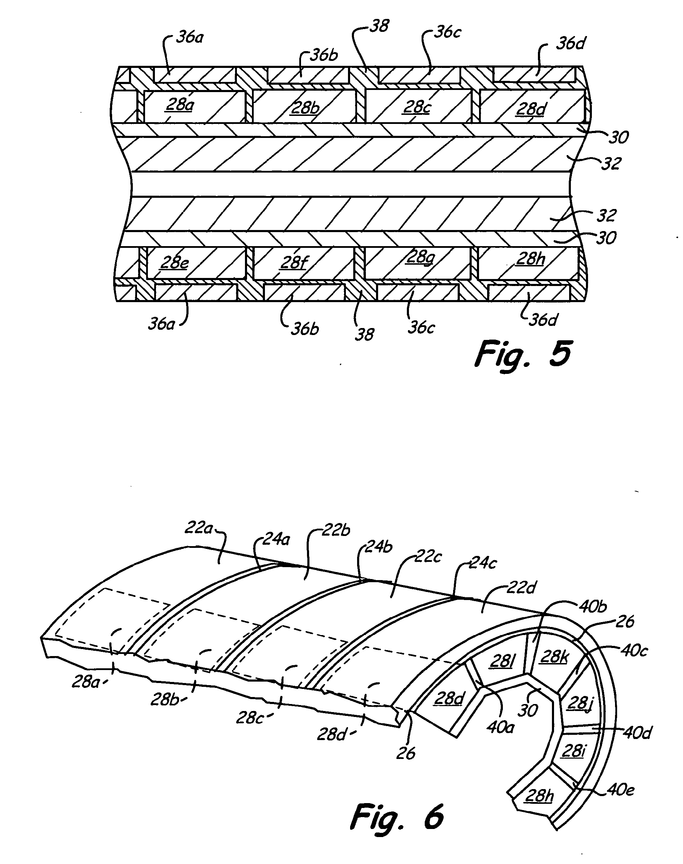

FIG. 5 is a cross-sectional view, taken along line 4-4, of another embodiment of permanent magnet rotor 20, in which the containment sleeve is replaced by a number of individual (i.e., not integral) containment-sleeve segments 36a, 36b, 36c, and 36d (collectively containment-sleeve segments 36). This is in contrast with the embodiment shown in FIG. 4, in which circumferential grooves 24 were cut into a portion of containment sleeve 21 to form containment-sleeve segments 22. In the embodiment shown in FIG. 5, the circumferential grooves are in effect extended through the entire depth of containment sleeve 21 such that each containment-sleeve segment 36 is entirely separate from adjacent containment-sleeve segments. For the sake of simplicity, the circumferential grooves described with respect to FIG. 5 will be referred to as circumferential gaps, although the term circumferential groove is understood to refer to the embodiments shown in both FIGS. 4 and 5.

Once again, the discontinuity between adjacent containment-sleeve segments 36 increases the length of the eddy-current path and therefore reduces the eddy-current losses generated within containment sleeve 21. In one embodiment, the circumferential gap between adjacent containment-sleeve segments 36 alone provides the electrical isolation necessary to reduce eddy-current losses. In another embodiment (as shown in FIG. 5), the circumferentially formed gaps are filled with second insulating layer 38 that provides electrical isolation between adjacent containment-sleeve segments 36a-36d.

The axial segmentation and insulation of permanent magnets 28 shown in FIG. 5 is identical to the axial segmentation and insulation of permanent magnets 28 shown in FIG. 4. That is, permanent magnets are axially segmented from one another to reduce eddy-current losses in the permanent magnet, and insulation is provided between permanent magnets and the containment sleeve to reduce eddy-current leakage from the permanent magnets 28 to the containment-sleeve segments 36.

FIG. 6 is a perspective view of permanent-magnet rotor 20, with portions broken away. The perspective view shown in FIG. 6 is the result of rotating the cross-sectional view shown in FIG. 4 to illustrate the circumferential segmentation of permanent magnets 28 (in addition to the axial segmentation of permanent magnets 28a-28h shown in FIGS. 4 and 5).

As shown in FIG. 6 and discussed with respect to FIG. 4, containment sleeve 21 is axially segmented into containment-sleeve segments 22. Circumferential grooves 24 formed in containment sleeve 21 provide electrical isolation between adjacent containment-sleeve segments 22 such that eddy-current losses are reduced. Similarly, as discussed with respect to FIG. 4, permanent magnets 28 are axially segmented from adjacent permanent magnets. As shown in FIG. 6, the gaps separating permanent magnets 28 are formed to align with the circumferential grooves that axially separate adjacent containment-sleeve segments. The benefits of axial segmentation of containment sleeve 21 into containment-sleeve segments 22a-22d and axial segmentation of permanent magnets is discussed with respect to FIGS. 4 and 5.

As shown in FIG. 6, permanent magnets 28 are also circumferentially segmented from one another along radial lines 40a-40e. In the embodiment shown in FIG. 6, one set of circumferentially segmented permanent magnets, including permanent magnets 28h, 28i, 28j, 28k, 281, and 28d, are shown. The circumferential segmenting of permanent magnets 28 further reduces the eddy-current losses within permanent magnet 28. To accommodate the circumferentially segmented permanent magnets, rotor hub 30 is designed to include a number of facets or faces to which the circumferentially segmented permanent-magnets may be adhered. For example, permanent magnet 28d is adhered to a first facet of rotor hub 30, and permanent magnet 281 is adhered to a second facet of rotor hub 30, and so on.

A further insulating layer (or continuation of second insulating layer 26 shown in FIG. 4 or of any insulating layer on the hub) may be placed in radial gaps 40a-40e between adjacent, circumferentially segmented, permanent magnets 28. Electrical isolation between adjacent permanent magnets in both the circumferential and axial directions decreases eddy-current losses in permanent magnets 28.

Quantitative analysis of axial segmentation of both the containment sleeve and the permanent magnets, as well as the presence of an insulating layer between the containment sleeve and the permanent magnets is shown in Table 1. The analysis details the eddy current losses associated with a variety of permanent-magnet-rotor configurations. A three-dimensional model of each configuration was simulated, with the results of the simulation indicating the expected thermal losses in both the rotor sleeve and the permanent magnets. In the simulated models, each model assumes circumferential segmentation of the permanent magnets along a sixteen-facet rotor hub. The simulated models are meant to illustrate generically the effectiveness of providing axial segmentation of the rotor sleeve and permanent magnets. Analysis of permanent magnet rotors having a different configuration or operated at various speeds will alter the results of the quantitative analysis presented in Table 1.

**Table 1**

| | | | | | | | | | |
|---|---|---|---|---|---|---|---|---|---|
| Segments | one | two | two | two | four | eight | eight | sixteen | sixteen |
| Magnets | one | one | one | two | four | two | two | four | sixteen |
| Insulation | no | no | yes | yes | yes | no | yes | yes | yes |
| | | | | | | | | | |
| Sleeve | 219.2 | 213.6 | 210.2 | 210.4 | 187 | 153.5 | 137.8 | 72 | 77.2 |
| (Watts) | | | | | | | | | |
| Magnets | 23.4 | 25 | 23.7 | 22.6 | 20.6 | 30 | 23.4 | 21.9 | 10.5 |
| (Watts) | | | | | | | | | |

The top row of Table 1 illustrates the configuration (i.e., the number of axial containment-sleeve segments and permanent-magnet segments) of a particular permanent-magnet rotor. The second row of data illustrates the eddy-current losses in the containment sleeve, and the third row of data illustrates the eddy-current losses in the permanent magnets.

As shown in Table 1, eddy current loss in the sleeve and the permanent magnets, combined, is highest with no axial segmentation of either the sleeve or the permanent magnets (1^{st} column of data). Axially segmenting the sleeve into two segments, without providing insulation between the sleeve and the permanent magnets, reduces the eddy-current loss in the sleeve, but increases the eddy current loss in the permanent magnets (2^{nd} column of data). By providing insulation between the sleeve segments and the permanent magnets, the eddy current loss in the sleeve and the permanent magnets is further reduced (3^{rd} column of data). Additional columns of data confirm that additional axial segmentation of both the sleeve and the permanent magnets reduces the eddy-current losses in each rotor component, respectively. In addition, the data confirms that providing insulation between the axially segmented sleeve and the axially segmented permanent magnets reduces the eddy-current losses in both the sleeve and the permanent magnets (illustrated by the 6^{th} and 7^{th} columns of data).

Although the present invention has been described with reference to preferred embodiments, workers skilled in the art will recognize that changes may be made in form and detail without departing from the scope of the invention, which is defined by the claims and their equivalents.

## Claims

1. A permanent-magnet rotor (20) for use in a permanent-magnet machine, the permanent-magnet rotor comprising:
a plurality of permanent magnets (28a-h) axially segmented such that adjacent permanent magnets are electrically isolated from one another;
a first insulating layer (26) affixed to the plurality of permanent magnets; and
a containment sleeve (21) in contact with the first insulating layer (26) to contain the plurality of permanent magnets (28a-h), wherein the containment sleeve (21) includes at least one circumferential groove (24a-c)that divides the containment sleeve (21) into two or more axially segmented containment-sleeve segments (22a-d).

2. The permanent-magnet rotor of claim 1 comprising a rotor core (32) and a rotor hub (30) affixed to the rotor core, wherein the permanent magnets (28a-h) are affixed to the rotor hub and the containment sleeve (21) acts to contain the permanent magnets against the rotor hub.

3. The permanent magnet rotor of claim 2, wherein the plurality of permanent magnets (28a-h) are circumferentially segmented such that adjacent permanent magnets (28a-h) located circumferentially around the outer surface of the rotor hub (30) are electrically isolated from one another.

4. The permanent magnet rotor of claim 3, wherein the rotor hub (30) includes:
a plurality of facets located circumferentially around the outer surface of the rotor hub (30), wherein each of the plurality of permanent magnets (28a-h) located circumferentially around the outer surface of the rotor hub (30) is affixed to one of the plurality of facets.

5. The permanent magnet rotor of claim 3 or 4, further including:
an insulating layer located between adjacent permanent magnets (28a-h) that electrically isolates the plurality of axially and circumferentially segmented permanent magnets (28a-h).

6. The permanent magnet rotor of any preceding claim, further including:
a second insulating layer located in the at least one circumferential groove (24a-c) located on the outer periphery of the containment sleeve (21).

7. The permanent magnet rotor of any of claims 1 to 5, wherein the circumferential groove (24a-c) located on the outer surface of the containment sleeve (21) extends to the inner surface of the containment sleeve (21) such that the two or more axially segmented containment-sleeve segments are physically isolated from one another.

8. The permanent magnet rotor of claim 7, further including:
a second insulating layer located in the at least one circumferential groove (24a-c) separating the two or more axially segmented containment sleeves (22a-d).

9. A permanent magnet rotor (20) for use in a high speed, synchronous machine, the permanent magnet rotor (20) comprising:
a cylindrical containment sleeve (21) that is axially segmented by one or more circumferential grooves (24a-c) located on an outer periphery of the cylindrical containment sleeve (21);
a plurality of permanent magnets contained in the radial direction by the cylindrical containment sleeve (21), wherein the plurality of permanent magnets are axially segmented such that at least one gap located between adjacent permanent magnets is aligned with one of the circumferential grooves (24a-c) located on the outer periphery of the cylindrical containment sleeve (21); and
an electrically insulating layer (26) located between the cylindrical containment sleeve (21) and the plurality of permanent magnets.

10. The permanent magnet rotor of claim 9, wherein the circumferential grooves (24a-c) extend to a first depth into the outer periphery of the cylindrical containment sleeve (21), wherein the first depth is less than the depth of the cylindrical containment sleeve (21).

11. The permanent magnet rotor of claim 9, wherein the circumferential grooves (24a-c) extend to a second depth into the outer periphery of the cylindrical containment sleeve, wherein the second depth is equal to the depth of the cylindrical containment sleeve (21).

12. The permanent magnet rotor of claim 9 or 10, further including:
a second insulating layer located in the circumferential grooves (24a-c) located on the outer periphery of the cylindrical containment sleeve (21).

13. The permanent magnet rotor of claim 9, 10, 11 or 12 further including:
an insulating layer located in the gaps between adjacent, axially segmented permanent magnets such that axially segmented permanent magnets are electrically isolated from one another.

14. The permanent-magnet rotor of any of claims 9 to 13, wherein the plurality of permanent magnets are circumferentially segmented from one another such that the plurality of permanent magnets are both circumferentially and axially segmented from adjacent permanent magnets.
